# EUROPEAN PATENT APPLICATION

(11) **EP 0 527 514 A1**
(43) Date of publication of application: **17.02.1993**
(21) Application number: 92202217.3
(22) Date of filing: 20.07.1992
(51) Int. Cl.: C25F 7/00, B23H 3/00

(54) **Method and apparatus for electro-chemical machining, for example polishing, a surface of an article**

(30) Priority: 13.08.1991 NL 9101379
(71) Applicant: SKF Industrial Trading & Development Co, B.V., NL-3439 MT Nieuwegein (NL)
(72) Inventor: Jacobson, Bo Olov, NL-3706 TG Zeist (NL); Ioannides, Eustathios, NL-3706 TB Zeist (NL); Wardle, Frank Peter, NL-2411 PK Bodegraven (NL)
(74) Representative: Metman, Karel Johannes

(57) **Abstract**

A method of electro-chemical polishing the bearing surfaces (5') of bearing rings (5) comprises providing an electrode (20) having a counter surface adapted to the bearing surface, supplying an electrolyte in a gap which is formed between the bearing surface and the counter surface of the electrode, and producing an electric current flowing from the electrode through the electrolyte to the bearing surface of the bearing ring to be polished, in order to establish an electrolysis for removing material from the bearing surface of the bearing ring to be polished. According to the invention the electrode and the bearing ring are rotated with respect to each other in order to be moved along each other in a direction parallel to the surface of the bearing ring to be polished. The electrode has in the case of a bearing surface of a ball bearing a circular section perpendicular to the direction of movement and only covers a part of the circumference of the bearing surface. The invention also includes an apparatus for carrying out this method.

## Description

The present invention relates to a method of electro-chemical machining, for example polishing, a surface of an article, comprising the steps of:
- providing an electrode having a counter surface adapted to the surface of the article;
- supplying an electrolyte in a gap which is formed between the surface of the article and the counter surface of the electrode;
- producing an electric current flowing from the electrode through the electrolyte to the surface of the article to be machined in order to establish an electrolysis for removing material from the surface of the article to be machined.

In a practically known prior art method the shape of the counter surface of the electrode is equally large as that of the surface of the article to be machined so that when the electrode is moved close to the surface to be machined, the counter surface of the electrode is substantially copied on the surface to be machined. Since the electrolytical process causes the formation of a large number of bubbles, it is practised to produce only a very short current pulse each time whereafter the electrode is moved from the article in order to allow the gas bubbles to escape. This process is repeated several times.

This known method has the disadvantage that the operational speed is not very high due to the limited very short current pulse. Furthermore a very large power source is necessary since, for obtaining an accurate machining operation, it is necessary to produce a very large current density between the electrode and the surface of the article to be machined, which current density should be obtained simultaneously over the whole surface to be machined.

The object of the present invention is to provide a method of the type mentioned in the preamble, wherein the disadvantages as described are removed in an effective way.

For this purpose the method according to the invention is characterized in that the electrode and the article are moved along each other in a direction parallel to the surface of the article to be machined, and in that the counter surface of the electrode is substantially complementary with the surface of the article in a direction perpendicular to the direction of movement, while opposite to any portion of the surface of the article there is positioned any portion of the electrode only during part of the cycle time.

Due to these measurements the cyclical movement between the electrode and the article each time automatically clears the surface to be machined in order to allow gas bubbles and material removed from the surface to be machined to escape and to be discharged. Furthermore, the counter surface of the electrode does not have to be precise in said direction of movement since the movement of the surfaces allong each other eliminates unaccuracies. Of course the movement should be very precise. The present invention also provides the possibility to make the length of the counter surface of the electrode in said direction of movement to be shorter than the length of the surface of the article in the same direction so that electric current is conducted only through part of the surface of the article to be machined and consequently it is not necessary to have a large power source in order to obtain a high current density. A high operational speed can be obtained because the current can be kept constant or it is at least possible to allow for longer current pulses compared with the prior art method. Of course the method according to the invention cannot be used for all surfaces to be machined, but only for those where the surface to be machined and the counter surface of the electrode may be moved along each other.

A favourable use of the method according to the invention is to machine circular symmetrical annular surfaces, wherein the electrode and the article are turned around an axis with respect to each other and an electrode being used of which the counter surface extends only a portion of the annular surface of the article. An example thereof polishing the radial bearing surface of a bearing ring of a rolling bearing, such as a ball bearing. In this application the method offers the advantage of obtaining a very small surface roughness, better rounding the tops of the surface roughnesses, stopping the formation of residual stress in or below the polished surface caused by polishing, and of eliminating changes in the microstructure below the surface as a consequence of the polishing operation. This results in a more accurate bearing having a longer service life.

In the method according to the invention it is favourable if the electrode and the article are moved toward each other dependent on the amount of material removed from the surface of the article.

Due to this feature it is possible to maintain the distance between the counter surface of the electrode and the surface of the article to be machined at a most favourable value during the machining of the surface of the article.

The invention further includes an apparatus for electro-chemical machining a surface of an article by means of the method described above comprising:
- an electrode having a counter surface adapted to the surface of the article;
- means for supplying an electrolyte into a gap formed between the surface of the article and the counter surface of the electrode;
- means for producing a current flowing from the electrode through the electrolyte to the surface of the article in order to establish an electrolysis at the position of the gap for removing material from the surface of the article; which is characterized by
- means for cyclically moving the electrode and the article along each other in a direction parallel to the surface of the article to be machined, and said counter surface of the electrode, in a section perpendicular to the direction of movement, being substantially complementary with the surface of the article.

The invention will hereafter be elucidated with reference to the drawing showing very schematically an embodiment of the invention by way of example.

Fig. 1 is a side view of an apparatus for electro-chemical polishing bearing rings according to the invention.

Fig. 2 is an enlarged vertical section of the apparatus of fig. 1.

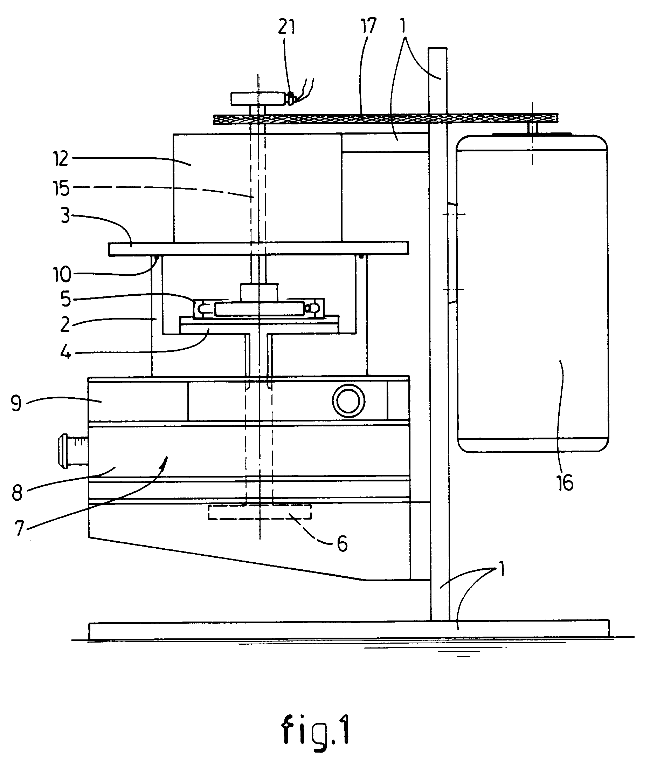

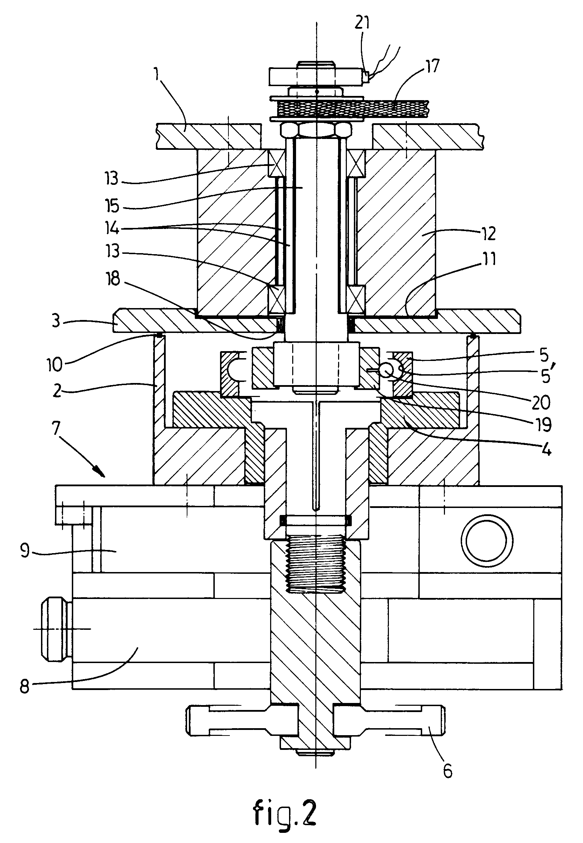

Fig. 1 shows an apparatus which is particularly suited for polishing the bearing surfaces of bearing rings of ball bearings. This apparatus includes a frame 1 for supporting the various parts of the apparatus which are shown in fig. 1 and/or fig. 2.

The heart of the apparatus is formed within a liquid container 2 which is made of electrically isolating material such as glass or plexiglass and which is sealed on the upper side by a cover 3. During operation the liquid container is filled with an electrolyte, such as a sodiumnitrate solution, which is constantly supplied and discharged through a supply and discharge (not shown) of the liquid container 2 and is preferably circulated through a circulating system including cleaning and filtrating means. On the bottom of the liquid container 2 is mounted a clamping device 4 for accurately position an outer bearing ring 5 of a ball bearing within the liquid holder 2. The clamping device 4 can be actuated by means of an actuating means 6. The liquid container 2 and the clamping device 4 are fixed on a positioning table 7 including a lower Y-slide 8 mounted onto the frame 1 and an upper X-slide 9 positioned thereon and supporting the liquid container 2 which is fixed thereon. By means of this positioning table 7 the liquid container 2 and the clamping device 4 may be positioned within a horizontal plane, the cover 3 remaining stationary during said movements so that the liquid container 2 and the cover 3 are not fixedly clamped together, but the liquid container 3 being displacebly sealed to the lower side of the cover 3 by means of a seal 10. The clamping device 4 may also be adjustable in vertical direction.

The cover 3 is suspended from a support 12 with an intermediate electrically isolating packing 11, said support 12 in turn being suspended from the frame 1. Within the support 12 there is rotatably supported a tool mandrel 15 with interpositioning of a very accurate bearing device 13 and electrically insulating elements 14. The tool mandrel 15 is rotatably driven by means of an electric motor 16 fixed to the frame 1 and transmitting the rotation of its shaft to the tool mandrel 15 by means of a belt or chain transmission 17. Between the tool mandrel 15 and the cover 3 of the liquid container 2 is a liquid seal 18.

On the lower end of the tool mandrel 15 there is mounted a tool holder 19 carrying an electrode 20 which is a metal ball or a ball segment. The electrode 20 is intended to polish the inner bearing surface 5' of the bearing ring 5 in an electro-chemical way. For this purpose the electrode 20 has a vertical section serving as counter surface and being accurately adapted to the desired bearing surface 5' of the bearing ring 5. The tool holder 19 is preferably adjustable in radial direction to the tool mandrel 15 in order to vary the distance to the bearing ring 5, also during the rotation of the tool mandrel 15.

The electrode may be energized by sliding contacts 21 connected to a power source and being adapted to conduct a current to the tool mandrel 15 and the electrode 20.

The operation of the embodiment of the apparatus for electro-chemical polishing as described above and shown in the drawing by way of example is as follows.

First of all a bearing ring 5 to be machined is clamped in the clamping device 4 and the electrode 20 is positioned within the bearing ring 5. Then the slides 8 and 9 of the positioning table 7 are adjusted such that the tool mandrel 15 and the bearing ring 5 have an accurate concentric relative position. The height of the electrode 20 relative to the bearing ring 5 is also adjusted, for instance by means of the clamping device 4. Subsequent electrolyte is pumped through the liquid holder 2, the tool mandrel 15 is set to rotate and the electrode 20 is energized with a rectified voltage by means of the sliding contacts 21.

Since the bearing ring 5 is connected to earth, a current will start to flow from the electrode 20 through the electrolyte to the bearing ring 5. In the gap between the outer radial surface of the electrode 20 and the opposed portion of the bearing surface 5' of the bearing ring an electrolytical reaction takes place so that, when the electrode 20 is moved along the bearing surface 5', small amounts of material are removed from the whole bearing surface 5' of the bearing ring. For obtaining a high polishing speed and a good polishing quality it is favourable to have a large current density between the electrode 20 and the bearing ring 5. Due to the very small effective surface of the electrode 20 this can be obtained with a relatively small current permitting the use of only a small power source. Because the electrode 20 moves along the bearing surface 5' of the bearing ring 5 and there is only a very short gap between them, gas bubbles and loose material particals formed during the electrolytical reaction may very easily escape and be discharged without necessitating the interruption of the current and the retraction of the electrode. The current may be kept constant, but it is also possible to operate with a pulsating current. During the electrolytical process material is only removed from the bearing ring 5 and not from the electrode 20, so that the electrode will have a very long life and a permanently accurate surface. The size of the developed gas bubbles may be reduced by pressurizing the electrolyte within the liquid container 2.

In case an inner ring of a ball bearing or other type of rolling bearing should be polished, it is preferred to mount the electrode 20 stationary by means of the clamping device 4 and to fix the inner ring to the tool mandrel 15. In this manner the radial outer bearing surface of the inner ring is moved along the stationary electrode. In this case the voltage should of course be reversely connected and the current should be directed from the stationary electrode to the moving inner ring.

The tool mandrel 15 may be rotated with a few up to a few thousand revolutions per minute depending on the application. In priciple it is possible to remove material having a thickness up to 100 µm from the surface to be polished. It is favourable to maintain a permanent gap of for example 0,3 mm between the bearing surface of the bearing ring 5 and the counter surface of the electrode. In order to obtain this, the electrode may be moved during the polishing operation in radial direction to the tool mandrel by means of the tool holder 19 and an actuating device connected therewith, outwardly toward the bearing surface 5' of the bearing ring 5, dependent on the amount of material removed from the bearing surface thereof. As a result the most optimal conditions can be maintained during the whole polishing operation.

The invention is not restricted to the embodiment described herein before and shown in the drawing by way of example, which can be varied in different manners within the scope of the invention. It would for instance be possible to use the method and apparatus according to the invention for machining radial surfaces of other articles, or for instance axial surfaces thereof. Further it is not necessary to cause the electrode and the article to be machined to perform a relative rotational movement; in principle it is also possible to have an oscilating linear movement or the like. It is also possible instead or in addition to having the electrolyte bath within the liquid holder 2 to provide a nozzle injecting electrolyte into the gap between the surface to be machined and the counter surface of the electrode. In that case it is favourable if the nozzle is integrated in the electrode since in that case the highest flow rates of the electrolyte are obtainable.

## Claims

1. Method of electro-chemical machining, for example polishing, a surface (5') of an article (5), comprising the steps of:
- providing an electrode (20) having a counter surface adapted to the surface of the article;
- supplying an electrolyte in a gap which is formed between the surface of the article and the counter surface of the electrode;
- producing an electric current flowing from the electrode through the electrolyte to the surface of the article to be machined in order to establish an electrolysis for removing material from the surface of the article to be machined,
**characterized** in that the electrode and the article are moved along each other in a direction parallel to the surface of the article to be machined, and in that the counter surface of the electrode is substantially complementary with the surface of the article in a direction perpendicular to the direction of movement, while opposite to any portion of the surface of the article there is positioned any portion of the electrode only during part of the cycle time.

2. Method according to claim 1 for machining circular symmetrical annular surfaces, wherein the electrode and the article are turned around an axis with respect to each other and an electrode being used of which the counter surface extends only a portion of the annular surface of the article.

3. Method according to claim 1 or 2, wherein the electrode and the article are moved towards each other dependent on the amount of material removed from the surface of the article.

4. Method according to one of the preceding claims for polishing the bearing surface of a bearing ring of a rolling bearing.

5. Apparatus for electro-chemical machining a surface (5') of an article (5) by means of the method according to one of the preceding claims, comprising:
- an electrode (20) having a counter surface adapted to the surface (5') of the article (5);
- means (2, 3) for supplying an electrolyte into a gap formed between the surface (5') of the article (5) and the counter surface of the electrode (20);
- means (21) for producing a current flowing from the electrode (20) through the electrolyte to the surface (5') of the article (5) in order to establish an electrolysis at the position of the gap for removing material from the surface (5) of the article (5); **characterized by**
- means (15, 16, 17) for cyclically moving the electrode (20) and the article (5) along each other in a direction parallel to the surface (5') of the article (5) to be machined, and said counter surface of the electrode, in a section perpendicular to the direction of movement, being substantially complementary with the surface (5') of the article (5).

6. Apparatus according to claim 5, wherein the length of the counter surface of the electrode (20) in said direction of movement is smaller than the length of the surface (5') of the article (5) in the same direction.

7. Apparatus according to claim 5 or 6, wherein the electrode (20) and the article (5) are fastened to a respective holder (19, 4) such that they are permitted to be moved towards each other by means of a drive during the cyclic movement.

8. Apparatus according to one of claims 5-7, for machining an annular surface (5') of an article (5) comprising a mandrel (15) rotatable by a motor (16) and adapted to hold the electrode (20) or the article (5), and a clamping device (4) for holding the article (5) or the electrode (20).

9. Apparatus according to claim 8 for polishing a radial bearing surface (5') of a ball bearing (5), wherein the electrode (20) is made from a metal ball.
